# EUROPEAN PATENT SPECIFICATION

(11) **EP 3 250 525 B1**
(45) Date of publication and mention of the grant of the patent: **27.01.2021**
(21) Application number: 16701784.7
(22) Date of filing: 27.01.2016
(51) Int. Cl.: C03B 5/235, C03C 13/06, C03B 5/44, F27B 3/20, C03C 3/087

(54) **MANUFACTURING OF CONTINUOUS BASALT FIBERS**
HERSTELLUNG VON KONTINUIERLICHEN BASALTFASERN
FABRICATION DE FIBRES BASALTES CONTINUES

(30) Priority: 27.01.2015 GB 201501308
(43) Date of publication of application: 06.12.2017
(73) Proprietor: Knauf Insulation, 4600 Visé (BE)
(72) Inventor: DEMOTT, Gerard, 1435 Mont-Saint-Guibert (BE); MAROLT, Bostjan, 1435 Mont-Saint-Guibert (BE); DUCARME, David, 1435 Mont-Saint-Guibert (BE)
(74) Representative: ARC-IP
(86) International application number: PCT/EP2016/051733
(87) International publication number: WO 2016/120349

(56) References cited:
- WO-A1-2013/186480
- WO-A1-2015/014917
- WO-A1-2015/014918
- WO-A1-2015/014920
- WO-A1-2015/014921
- DE-A1- 10 029 983
- US-A1- 2014 007 623

## Description

The present invention relates to an improved process for the manufacturing of continuous mineral fibers, more particularly continuous basalt fibers. It further relates to an equipment for the production of continuous mineral fibers.

Basalt fibers are used as reinforcing materials in different types of composite materials, such as polymeric friction materials, car bodies, sports equipment, but also in concrete. They may also be used as heat protection in different applications. New applications are developed on an ongoing basis. Basalt fibers are very fine with diameters of about 5 to 15 µm, sometimes up to 25 µm, and offer better mechanical properties than glass fibers. While their mechanical properties remain below those of carbon fibers, their price is significantly lower than the price of carbon fibers.

Basalt fibers are made essentially from basalt rock which is melted above about 1400 °C, with no significant addition of further raw materials, other than some processing additives, and then extruded through appropriate dies. Basalt generally comprises 45.0-60.0 wt % SiO2, preferably 45.0 to 55.0 wt% SiO2, 12.0-25.0 wt% Al2O3, preferably 12.0 - 18.0 wt% Al2O3, 5.0-25.0 wt% total iron oxide expressed as Fe203, preferably 10.0 - 18.0 total iron oxide, total alkali of 2.0-6.0 wt%, 5.0-25.0 wt% CaO, preferably 5.0 to 13.0 or even below 10.0 wt%, 4.0-25.0 wt% MgO, preferably 5.0 - 12.0 wt % MgO, and 0.0-5.0 wt% TiO2. In basalt fibers, the iron oxide content is generally relatively high, more than 12 wt%, or 13 wt%, or even 15 wt%, with rather reduced CaO content. The Na2O content may vary between 0.5 and 5.0 wt% and K2O may vary between the same limits. Typical formulations may comprise the basalt rock composition plus processing aids, including but not limited to TiO2.

US2014007623 A1 teaches a process and an apparatus for manufacturing continuous mineral fibers, the process comprising feeding the batch into a submerged combustion melter, melting it, and forming the fibers.

WO2013186480 A1 teaches the making of basalt wool. The fibers are made in a submerged combustion melter with liquid-cooled double metal walls.

The production of basalt fibers requires high energy inputs, and there is an ever increasing need for improvement of the energy efficiency of the manufacturing process.

Moreover, because of the highly corrosive nature of the raw materials and melt to be treated, the refractory lining of the furnaces in which the basalt rock is melted needs to be repaired or replaced after relatively short time periods. In addition, the melt is contaminated with particles or elements worn off the refractory furnace lining. There is hence a need to find a way to overcome that technical problem.

According to the invention as defined in claim 1, a process for the manufacturing of continuous mineral fibers may comprise introducing solid batch material for preparation of continuous mineral fibers into a melter, melting the solid batch material in the melter by submerged combustion, and forming the melt into continuous mineral fibers, such as by extrusion through appropriate filament bushings.

The process may be carried out using a method and/or melter disclosed in any of WO 2015/014919 WO 2015/014920 or WO 2015/014921.

According to the present invention, the raw material consists essentially in basalt rock. The continuous fibers are basalt fibers.

Submerged combustion melters are known. These melters are characterized by the fact that they include one or more burner nozzles arranged below the surface of the melt, in a lance, in the melter walls and/or melter bottom, preferably in the melter bottom, such that the burner flame and/or combustion products pass through the melt and transfer energy directly to the melt.

Such burners arranged below the surface of the melt are herein sometimes referred to as submerged burners; it being understood that they are submerged when melt is present in the melter.

More particularly in the case of basalt, the melting temperature is comprised between 1350 and 1450, preferably higher than 1400°C.

The submerged combustion melter ensures efficient mixing in the melt, and homogenizes the melt in terms of temperature profile and composition, leading to a high quality fiber product. The stirring reduces required residence time in the melter prior to withdrawal for downstream forming. It also favors the absorption of raw material into the melt and improves heat transfer to fresh raw material. Fresh raw material may be charged into the melter as relatively large stones and does not require grinding into fine granular size. The high turbulence generated in the melt maintains it at the required viscous state suitable for fiberization, at a temperature below the temperature normally required in standard tank melters of basalt rock for fiberization into continuous fibers.

The melt contained in the submerged combustion melter is advantageously maintained in a turbulent state. It is known that submerged combustion generates high agitation and turbulence in the melt bath, because of the combustion gases injected at high pressure into the melt and because of convection flows thereby generated in the melt. Preferably, the submerged burners are controlled such that the volume of the turbulent melt is at least 8%, more preferably at least 10%, even more preferably at least 15%, higher than the volume it would have without any burners firing. It has been found that the gas injection into the liquid melt and the convection flows thereby generated in the melt reduce the density thereof. Suitable control of the oxy-fuel burners generates the desired density reduction or volume increase. Preferably, the process is run such that no significant foam layer or no foam layer at all is generated over the top of the melt level. It has been found that such a foam layer is disadvantageous for the energy transfer within the melter, and hence the efficiency thereof.

For the sake of clarity and completeness, the level the melt would be at when no burners are firing may be calculated on the basis of the melt composition and/or verified by allowing the melt to freeze in the melter. The level of turbulent melt may be determined by an appropriate measuring device, such as a known laser pointer or similar device, which averages melt levels over a given period of time, such as 1 or 5 minutes.

The increased volume or reduced density of the melt bath is considered a reflection of the turbulence level in the melt; the more turbulent the melt, the more gas bubbles are absorbed within the melt and thus "aerate" the melt. A reduced foam layer over the top of the melt level further reflects that the gas bubbles generated by the gas injection are maintained within the melt bath, rather than to accumulate on the surface thereof.

The homogeneity of the melt composition is an important factor in the extrusion of low diameter fibers in a continuous fashion. Further, a highly homogenous melt also impacts the quality of the final product, including the mechanical and chemical properties. Homogeneity of the melt through the extrusion process further reduces the rupture of the continuous fiber in the course of the extrusion process.

Furthermore, the melting chamber walls of the production equipment as defined in claim 9 comprise double steel walls separated by circulating cooling liquid, preferably water. Particularly in the case of a cylindrical melting chamber, such assembly is relatively easy to build and is capable of resisting high mechanical stresses. A cylindrical shape of the melter facilitates balance of stresses on the outside wall. As the walls are cooled, for example water cooled, melt preferably solidifies and forms a protective layer on the inside of the melter wall. The melter assembly may not require any internal refractory lining and therefore needs less or less costly maintenance. In addition, the melt is not contaminated with undesirable components of refractory material normally eroded from an internal refractory lining. The internal face of the melter wall may advantageously be equipped with tabs or pastilles or other small elements projecting towards the inside of the melter. These may help in constituting and fixing a layer of solidified melt on the internal melter wall generating a lining having thermal resistance and reducing the transfer of heat to the cooling liquid in the double walls of the melter.

The melter may be equipped with heat recovery equipment. Hot fumes from the melter may be used to preheat raw material or the thermal energy contained in them may be recovered and used otherwise. Similarly, the thermal energy contained in the cooling liquid circulating between the two walls of the melter may also be recovered for heating or other purposes.

Overall the energy efficiency of submerged combustion melters is significantly improved compared to conventional tank melters.

The raw materials may be loaded through an opening in the melter wall, above the melt surface. Said opening may be opened and closed, for example by a piston, to minimize escape of heat and fumes. Raw material may be prepared and loaded into an intermediate chute and subsequently fall into the melter, in an opposite direction to escaping fumes, onto the melt surface. This countercurrent flow may advantageously preheat the raw materials. In the alternative, the raw materials may be charged below the level of the melt, by way of a screw feeder or a hydraulic feeder.

Melt may be withdrawn continuously or batch wise from the melter for further forming in appropriate extrusion or bushing equipment. Where raw material is loaded close to the melter wall, the melt outlet is preferably arranged opposite the material inlet. In the case of discontinuous discharge of melt, a discharge opening maybe controlled by, for example, a ceramic piston. In the alternative a syphon-type discharge may be used which controls the melt level in the melter.

The submerged burners preferably inject high pressure jets of combustion products into the melt that is sufficient to overcome the liquid pressure and to create forced upward travel of the flame and combustion products. The speed of the combustion and/or combustible gases, notably at the exit from the burner nozzle(s), may be ≥ 60 m/s, ≥ 100 m/s or ≥ 120 m/s and/or ≤350 m/s, ≤330 m/s, ≤300 or ≤200 m/s. Preferably the speed of the combustion gases is in the range of about 60 to 300 m/s, preferably 100 to 200, more preferably 110 to 160 m/s.

According to a preferred embodiment, the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining a substantially toroidal flow pattern.

The generation of such a toroidal flow pattern ensures highly efficient mixing of the melt and absorption of raw material into the melt, and homogenizes the melt in terms of temperature profile and composition, thus leading to high quality final product.

Advantageously, the melting step comprises melting the solid batch material, in a submerged combustion melter by subjecting the melt to a flow pattern which when simulated by computational fluid dynamic analysis shows a substantially toroidal melt flow pattern in the melt, comprising major centrally inwardly convergent flow vectors at the melt surface, with the central axis of revolution of the toroid being substantially vertical.

At the vertical axis of revolution of said toroidal flow pattern, the flow vectors have a downward component reflecting significant downward movement of the melt in proximity of said axis. Towards the melter bottom, the flow vectors change orientation showing outward and then upward components.

Preferably the fluid dynamics model is code ANSYS R14.5, taking into consideration the multi-phase flow field ranging from solid batch material to liquid melt and gas generated in the course of the conversion, and the batch-to-melt conversion.

A toroidal melt flow pattern may be obtained using submerged combustion burners arranged at the melter bottom in a substantially annular burner zone imparting a substantially vertically upward directed speed component to the combustion gases. Advantageously, the burners are arranged with a distance between adjacent burners of about 250 - 1250 mm, advantageously 500 - 900 mm, preferably about 600 - 800, even more preferably about 650 - 750 mm. It is preferred that adjacent flames do not merge.

Each burner axis and/or a speed vector of the melt moving upwards over or adjacent to the submerged burners may be slightly inclined from the vertical, for example by an angle which is ≥1 °, ≥2°, ≥3° or ≥5 and/or which is ≤ 30°, preferably ≤ 15°, more preferably ≤10°, notably towards the center of the melter. Such an arrangement may improve the flow and directs melt flow away from the outlet opening and/or towards a center of the melter thus favoring a toroidal flow and incorporation of raw material in to the melt.

According to one embodiment, each central burner axis is inclined by a swirl angle with respect to a vertical plane passing through a central vertical axis of melter and the burner center. The swirl angle may be ≥1 °, ≥2°, ≥3°, ≥5° and/or ≤ 30°, ≤ 20°, ≤ 15° or ≤ 10°. Preferably, the swirl angle of each burner is about the same. Arrangement of each burner axis at a swirl angle imparts a slightly tangential speed component to the upward blowing flames, thus imparting a swirling movement to the melt, in addition to the toroidal flow pattern.

The burner zone is defined as a substantially annular zone. Burner arrangements, for example on an elliptical or ovoid line within the relevant zone are possible, but the burners are preferably arranged on a substantially circular burner line.

Preferably, the flow pattern comprises an inwardly convergent flow at the melt surface followed by a downwardly oriented flow in proximity of the central axis of revolution of the toroid. Said central axis of revolution advantageously corresponds to the vertical axis of symmetry of the melter. By axis of symmetry is meant the central axis of symmetry and, if the melter shows a transversal cross-section which does not have any single defined axis of symmetry, then the axis of symmetry of the circle in which the melter section is inscribed. The downwardly oriented flow is followed by an outwardly oriented flow at the bottom of the melter and a substantially annular upward flow at proximity of the burners, reflecting recirculation of melt toward the burner zone and in an ascending movement back to the melt surface, thus defining a substantially toroidal flow pattern.

The inwardly convergent flow vectors at the melt surface advantageously show a speed comprised between 0.1-3 m/s. The downward oriented speed vectors at proximity of the vertical central axis of revolution are preferably of significant magnitude reflecting a relatively high speed of material flowing downwardly. The downward speed vectors may be between 0.1-3 m/s. The melt and/or the raw materials within the melter, at least at one portion of the melter and notably at the melt surface (particularly inwardly convergent flow vectors at the melt surface) and/or at or proximate a vertical central axis of revolution, may reach a speed which is ≥0.1 m/s, ≥0.2 m/s, ≥0.3 m/s or ≥0.5 m/s and/or which is ≤2. 5 m/s, ≤2 m/s, ≤1. 8 m/s or ≤1.5 m/s.

The preferred toroidal flow pattern ensures highly efficient mixing and homogenizes the melt in terms of temperature profile and composition. It also favors the absorption of raw material into the melt and improves heat transfer to fresh raw material. This reduces required residence time in the melter prior to withdrawal, while avoiding or at least reducing the risk of raw material short cutting the melt circulation.

In one preferred embodiment, the burners are arranged at a distance of about 250 - 750 mm from the side wall of said melting chamber; this favors the preferred flow described above and avoids flame attraction to the melting chamber side walls. Too small a distance between burners and side wall may damage or unnecessarily stress the side wall. While a certain melt flow between burner and wall may not be detrimental and may even be desirable, too large a distance will tend to generate undesirable melt flows and may create dead zones which mix less with the melt in the center of the melter and lead to reduced homogeneity of the melt.

The distance between submerged burners is advantageously chosen such as to provide the desired toroidal flow pattern within the melt but also to avoid that adjacent flames merge. While this phenomenon depends on many parameters such as temperature and viscosity of the melt, pressure and other characteristics of the burners, it has been found advantageous to select a burner circle diameter comprised between about 1200 and 2000 mm. Depending on burner type, operating pressure and other parameters, too large a diameter will lead to diverging flames; too narrow a diameter will lead to merging flames.

Preferably at least 6 burners are provided, for example arranged on a burner circle line, more preferably 6 to 10 burners, even more preferably 6 to 8 burners, depending on the melter dimensions, burner dimensions, operating pressure and other design parameters.

Each burner or each of a plurality of a group of burners, for example opposed burners, may be individually controlled. Burners close to a raw material discharge may be controlled at different, preferably higher gas speeds and/or pressures than adjacent burners, thus allowing for improved heat transfer to the fresh raw material that is being loaded into the melter. Higher gas speeds may be required only temporarily, that is, in the case of batch wise loading of fresh raw material, just during the time period required for absorption of the relevant load into the melt contained in the melter.

It may also be desirable to control burners that are located close to a melt outlet at a lower gas speed/pressure in order not to disturb the outlet of the melt.

The melting chamber is preferably substantially cylindrical in cross section; nevertheless, it may have an elliptical cross section or polygonal cross section showing more than 4 sides, preferably more than 5 sides.

The composition of the melt produced may typically comprise:

| | Example 1 composition (% weight) | Example 2 composition (% weight) |
|---|---|---|
| SiO₂ | 51.25 | 51.4 |
| Al₂O₃ | 15.75 | 13.3 |
| CaO | 8.13 | 8.6 |
| Fe₂O₃ (total iron) | 13.49 | 14.6 |
| MgO | 6.63 | 5.1 |
| Na2O | 2.09 | 2.7 |
| K2O | 0.49 | 0.7 |
| TiO2 | 1.62 | |
| MnO | 0.21 | |

possibly with minor amounts of other oxides to add up to 100%.

An embodiment of a melter suitable for use in accordance with the present invention is described below, with reference to the appended drawings of which:
Figures 1a and 1b are schematic representations of a toroidal flow pattern;

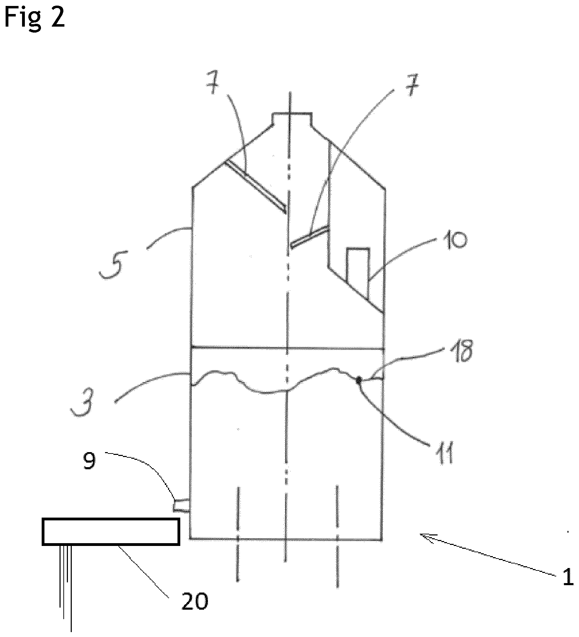

Figure 2 shows schematically a vertical section through a melter followed by a an extrusion device; and

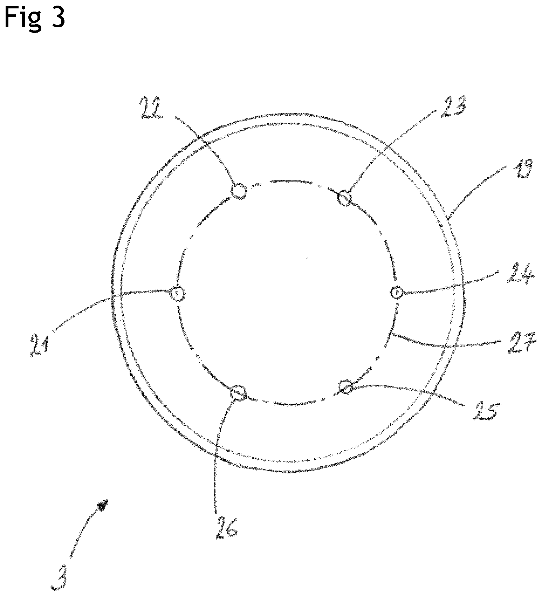

Figure 3 is a schematic representation of a burner layout.

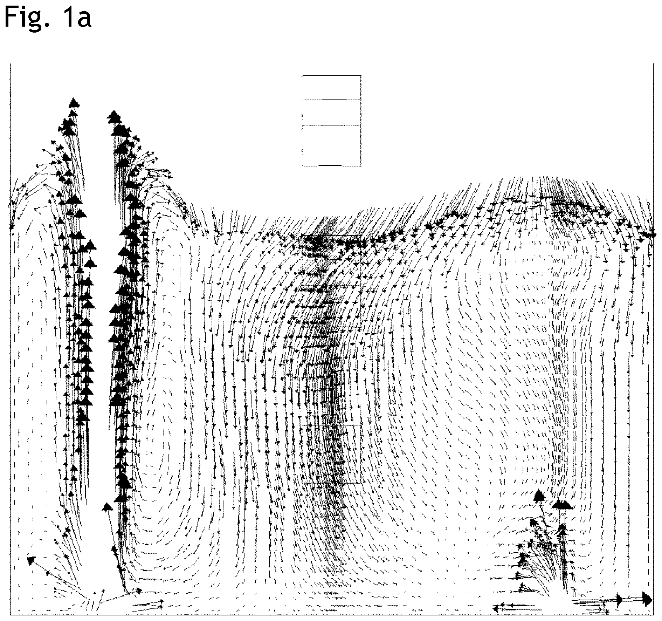

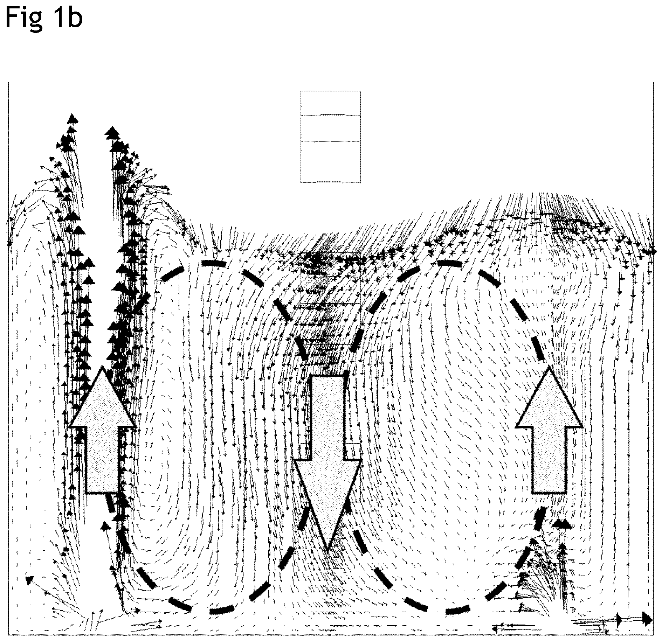

With reference to Figs 1a and 1b, a toroidal flow pattern is preferably established in which melt follows an ascending direction close to submerged burners 21, 22, 23, 24, 25, 26 which are arranged on a circular burner line 27, flows inwardly towards the center of the circular burner line at the melt surface, and flows downwards in the proximity of the said center. The toroidal flow generates agitation in the melt, ensures good stirring of the melt, and absorption of raw material into the melt.

The illustrated melter 1 comprises: a cylindrical melting chamber 3 having an internal diameter of about 2.0 m which contains the melt; an upper chamber 5; and a chimney for evacuation of the fumes. The upper chamber 5 is equipped with baffles 7 that prevent any melt projections thrown from the surface 18 of the melt being entrained into the fumes. A raw material feeder 10 is arranged at the upper chamber 5 and is designed to load fresh raw material including man-made mineral fibers into the melter 1 at a point 11 located above the melt surface 18 and close to the side wall of the melter. The feeder 10 comprises a horizontal feeding means, for example a feed screw, which transports the raw material mix to a hopper fastened to the melter, the bottom of which may be opened and closed by a vertical piston. In the alternative, an underlevel feeder may charge raw material directly into the melt, under the level of the melt. The bottom of the melting chamber comprises six submerged burners 21, 22, 23, 24, 25, 26 arranged on a circular burner line 27 concentric with the melter axis and having a diameter of about 1.4 m. The melt may be withdrawn from the melting chamber 3 through a controllable outlet opening 9 located in the melting chamber side wall, close to the melter bottom, substantially opposite the feeding device 10. The melt withdrawn from the melter may then be allowed to cool and ground as required. In the alternative, a syphon-type outlet may be used which concomitantly continuously controls the level of the melt in the melter.

The temperature within the melt may be between 1350°C and 1450°C, preferably about 1400°C, depending on the composition of the melt, desired viscosity and other parameters. Preferably, the melter wall is a double steel wall cooled by a cooling liquid, preferably water. Cooling water connections provided at the external melter wall allow a flow sufficient to withdraw energy from the inside wall such that melt can solidify on the internal wall and the cooling liquid, here water, does not boil.

The melter 1 may be mounted on dampers adapted to absorb vibrational movements.

The submerged burners comprise concentric tube burners operated at gas flows of 100 to 200 m/s, preferably 110 to 160 m/s and generate combustion of fuel gas and oxygen containing gas within the melt. The combustion and combustion gases generate agitation within the melt before they escape into the upper chamber and then through the chimney. These hot gases may be used to preheat the raw material and/or the fuel gas and/or oxidant gas (eg oxygen, industrial oxygen have an oxygen content ≥ 95% by weight or oxygen enriched air) used in the burners. The fumes are preferably filtered prior to release to the environment, optionally using dilution with ambient air to reduce their temperature prior to filtering.

It has been found that the burner arrangement and control to obtain the above described toroidal melt flow pattern may ensure appropriate mixing in the melt as well as the required turbulence to sufficiently increase the melt volume (or reduce the melt density) to reach the objective of the present invention. Foam formation is particularly reduced, as the gas bubbles reaching the top of the melt are reabsorbed and mixed within the melt as a result of the toroidal flow pattern.

The molten basalt rock may then be discharged continuously or batch wise into an extrusion or filament bushing device 20 known per se for the formation of continuous basalt fibers. The molten basalt rock is discharged directly into the forming device 20, that is without any intermediate refining step.

The obtained continuous fibers may be used as such or further treated or conditioned for downstream applications as appropriate.

The continuous fibers obtained are of high quality. The above described production process is less energy demanding then known processes, because of the choice of submerged combustion melters that allow for improved energy transfer to the melt, shorter residence times and thus less heat loss, and because the high turbulence and stirring leads to a more homogenous melt at reduced melt viscosity, which in turn may allow for operation at reduced temperatures. Furthermore, submerged combustion may advantageously be performed in water-cooled melters which are easier and less costly to maintain and repair and which further allow for recycling of the energy withdrawn from the cooling fluid.

## Claims

1. Process for the manufacturing of continuous basalt fibers, comprising the steps of:
- introducing a solid batch material which consists essentially of basalt rock for preparation of continuous basalt fibers into a melter;
- melting the solid batch material in the melter by submerged combustion to form a liquid melt;
- wherein the melting chamber walls comprise double steel walls separated by circulating cooling liquid;
- discharging the liquid melt directly into a forming device without any intermediate refining step, and forming at least a portion of the liquid melt into continuous basalt fibers.

2. Process according to claim 1 wherein the raw material comprises 45.0-60.0 wt % SiO2, 12.0-25.0 wt% Al2O3, 5.0-25.0 wt% tot iron oxide expressed as Fe203, total alkali of 2.0-6.0 wt%, 5.0-25.0 wt% CaO, 4.0-25.0 wt% MgO and 0.0-5.0 wt% TiO2 and trace amounts of other oxides to add up to 100%.

3. Process according to any preceding claim, wherein the melting chamber walls comprise double steel walls separated by circulating cooling water.

4. Process according to any preceding claim, wherein heat is recovered:
- from the hot fumes and/or from the cooling liquid; and/or
- from the hot fumes to preheat the raw materials.

5. Process according to any preceding claim, wherein part at least of the melt is withdrawn continuously or batchwise from the melter.

6. Process according to any preceding claim, wherein the melter comprises at least one submerged burner, and the said at least one submerged burner is controlled such as to maintain the melt in a turbulent state such that the volume of the turbulent melt is at least 8%, preferably at least 10%, more preferably at least 15% higher than the level the melt would be at if no burners are firing and notably wherein it is operated such that no significant foam layer is generated over the top of the melt level.

7. Process according to any preceding claim, wherein the submerged combustion is performed such that a substantially toroidal melt flow pattern is generated in the melt, having a substantially vertical central axis of revolution, comprising major centrally inwardly convergent flows at the melt surface; the melt moves downwardly at proximity of the vertical central axis of revolution and is recirculated in an ascending movement back to the melt surface, thus defining an substantially toroidal flow pattern.

8. Process according to any preceding claim, wherein the melting step comprises melting the solid batch material, in a submerged combustion melter by subjecting the melt to a flow pattern which shows a substantially toroidal melt flow pattern in the melt, comprising major centrally inwardly convergent flow vectors at the melt surface, with the central axis of revolution of the toroid being substantially vertical and notably wherein towards the melter bottom, the flow vectors change orientation showing outward and then upward components, the melt flow pattern being determined by simulation by means of computational fluid dynamics analysis.

9. Production equipment for the manufacturing of continuous basalt fibers comprising a submerged combustion melter (1) comprising melting chamber (3) walls (19) and at least one submerged burner, and equipped with a raw material discharge or feeder (10) and melt outlet (9), and a continuous fiber forming device (20), wherein the melting chamber (3) walls comprise double steel walls (19) separated by circulating cooling liquid, preferably water, wherein submerged combustion burners (21,22,23,24,25,26) are arranged at the melter bottom in a substantially annular burner zone, preferably on a burner circle (27), and wherein the melter is directly followed by a forming device (20) without any intermediate refining step.

10. Production equipment according to claim 9 wherein the burners (21,22,23,24,25,26) are arranged with a distance between adjacent burners of 250 - 1250 mm, advantageously 500 - 900 mm, preferably 600 - 800, even more preferably 650 - 750 mm.

11. Production equipment according to any of claims 9 to 10 wherein each burner axis and/or a speed vector of the melt moving upwards over or adjacent to the submerged burners is slightly inclined from the vertical, for example by an angle which is ≥1°, ≥2°, ≥3° or ≥5 and/or which is ≤ 30°, preferably ≤ 15°, more preferably ≤10°, notably towards the center of the melter (1).

12. A Production equipment according to any of claims 9 to 11 wherein each central burner axis is inclined by a swirl angle with respect to a vertical plane passing through a central vertical axis of melter and the burner center, the swirl angle being ≥1°, ≥2°, ≥3°, ≥5° and/or ≤ 30°, ≤ 20°, ≤ 15° or ≤ 10°.

## Patentansprüche

1. Verfahren zur Herstellung von kontinuierlichen Basaltfasern aufweisend die Verfahrensschritte:
- Einführen von festem Rohstoffmaterial, das wesentlich aus Basaltgestein besteht, in einen Schmelzofen zur Herstellung von kontinuierlichen Basaltfasern;
- Einschmelzen des festen Rohstoffmaterials in den Schmelzofen durch Tauchverbrennung zur Bildung einer flüssigen Schmelze;
- wobei die Schmelzofenwandungen doppelte durch zirkulierende Kühlflüssigkeit getrennte Stahlwandungen aufweisen;
- Auslass der flüssigen Schmelze ohne zwischengeschalteten Raffinierungsschritt unmittelbar in eine Formeinrichtung und Formen wenigstens eines Teils der flüssigen Schmelze in kontinuierliche Basaltfasern.

2. Verfahren nach Anspruch 1 wobei das Rohmaterial 45,0-60,0 Gewichts-% SiO₂, 12,0-25,0 Gewichts-% Al₂O₃, 5,0-25,0 Gewichts-% Gesamteisenoxid als Fe₂O₃ ausgedrückt, 2,0-6,0 Gewichts-% Gesamtalkali, 5,0-25,0 Gewichts-% CaO, 4,0-25,0 Gewichts-% MgO und 0,0-5,0 Gewichts-% TiO₂ und Spurenmengen von anderen Oxiden aufweist, wobei sich die Gewichtsanteile auf eine Gesamtmenge von 100% addieren.

3. Verfahren nach einem der vorhergehenden Ansprüche, bei dem die Schmelzofenwandungen doppelte durch zirkulierendes Kühlwasser getrennte Stahlwandungen aufweisen.

4. Verfahren nach einem der vorhergehenden Ansprüche, bei dem Wärme rückgewonnen wird:
- von den heissen Rauchgasen und/oder von der Kühlflüssigkeit; und/oder
- von den heissen Rauchgasen zum Vorwärmen der Rohstoffmaterialien.

5. Verfahren nach einem der vorhergehenden Ansprüche, bei dem wenigstens ein Teil der flüssigen Schmelze kontinuierlich oder batchweise vom Schmelzofen entladen wird.

6. Verfahren nach einem der vorhergehenden Ansprüche, bei dem der Schmelzofen wenigstens einen Tauchbrenner aufweist, der gesteuert ist, um die flüssige Schmelze in einem turbulenten Zustand zu erhalten sodass das Volumen der turbulenten flüssigen Schmelze wenigstens 8%, vorzugsweise wenigstens 10%, mehr bevorzugt wenigstens 15%, grösser ist als das Niveau der Schmelze bei nicht funktionierenden Brennern, und insbesondere wobei er so betrieben wird, dass keine signifikante Schaumschicht über den Schmelzspiegel gebildet wird.

7. Verfahren nach einem der vorhergehenden Ansprüche, bei dem die Tauchverbrennung so betrieben wird, dass ein im Wesentlichen toroidales Strömungsbild in der Schmelze gebildet wird, mit einer im Wesentlichen senkrechten zentralen Revolutionsachse und einem wichtigen Anteil von zentral nach Innen konvergierenden Strömungen an der Schmelzoberfläche, wobei in der Nähe der senkrechten zentralen Revolutionsachse die Schmelze sich nach Unten bewegt und in einer Aufwärtsbewegung zurück zur Schmelzoberfläche rezirkuliert wird, wobei dabei ein im Wesentlichen toroidales Strömungsbild definiert wird.

8. Verfahren nach einem der vorhergehenden Ansprüche, bei dem der Verfahrensschritt des Einschmelzens das Einschmelzen von festem Rohmaterial in einem Tauchverbrennungsofen aufweist, wobei die Schmelze einem Strömungsbild unterworfen wird, das ein im Wesentlichen toroidales Strömungsbild in der Schmelze zeigt, mit einem wichtigen Anteil von zentral nach Innen konvergierenden Strömungsvektoren an der Schmelzoberfläche und einer im Wesentlichen senkrechten zentralen Toroid-Revolutionsachse, wobei insbesondere am Schmelzofenboden die Strömungsvektoren ihre Orientierung ändern und nach aussen- und dann aufwärtszeigende Komponenten aufweisen, wobei das Strömungsbild durch Simulation mit numerischer Strömungsanalyse bestimmt wird.

9. Produktionsanlage zur Herstellung von kontinuierlichen Basaltfasern aufweisend einen Tauchverbrennungsofen (1) mit Schmelzkammerwandungen (3,19) und wenigstens einem Tauchbrenner, und ausgerüstet mit einer Rohstoffmaterialausstossvorrichtung oder -aufgabevorrichtung (10) und einem Schmelzauslass (9), sowie eine Einrichtung (20) zum Formen von kontinuierlichen Fasern, wobei die Schmelzkammerwandungen doppelte durch zirkulierende Kühlflüssigkeit, vorzugsweise Wasser, getrennte Stahlwandungen (19) aufweisen, wobei Tauchbrenner (21,22,23,24,25,26) am Schmelzofenboden in einer im Wesentlichen ringförmigen Brennerzone, vorzugsweise auf einem Brennerring, angeordnet sind, und wobei unmittelbar hinter dem Schmelzofen eine Formeinrichtung (20) ohne zwischengeschalteten Raffinieringsschritt angeordnet ist.

10. Produktionsanlage nach Anspruch 9, in der die Tauchbrenner (21,22,23,24,25,26) in einem Abstand zwischen benachbarten Brennern von 250 -1250 mm, vorteilhafterweise von 500 - 900 mm, vorzugsweise von 600 - 800, mehr bevorzugt von 650 - 750 mm, angeordnet sind.

11. Produktionsanlage nach einem der Ansprüche 9 bis 10, in der jede Brennerachse und/oder ein Geschwindigkeitsvektor der sich über oder in der Nähe von Tauchbrennern aufwärts bewegenden Schmelze leicht zur Senkrechten hin geneigt ist, zum Beispiel um einen Winkel, der ≥ 1°, ≥ 2°, ≥ 3° oder ≥ 5° und/oder ≤ 30°, vorzugsweise ≤ 15°, mehr bevorzugt ≤ 10° ist, insbesondere zum Schmelzofenzentrum hin.

12. Produktionsanlage nach einem der Ansprüche 9 bis 11, in der jede zentrale Brennerachse um einen Wirbelwinkel zu einer senkrechten durch die zentrale senkrechte Schmelzofenachse und die Brennermitte laufende Ebene geneigt ist, wobei der Wirbelwinkel ≥ 1°, ≥ 2°, ≥ 3°, ≥ 5° und/oder ≤ 30°, ≤ 20°, ≤ 15° oder ≤ 10° ist.

## Revendications

1. Procédé pour la fabrication de fibres de basalte continues, comportant les étapes suivantes :
- introduction dans un four de fusion d'une charge de matières premières solides qui consiste essentiellement en de la roche de basalte pour la préparation de fibres continues de basalte ;
- fusion de la charge de matières premières dans le four de fusion moyennant combustion immergée afin de former un bain fondu liquide ;
- les parois de la chambre de fusion comportant des parois d'acier doubles séparées par un liquide de refroidissement en circulation ;
- déversement du bain fondu liquide directement dans un dispositif de formage sans étape d'affinage intermédiaire, et formage d'au moins une partie du bain fondu en fibres de basalte continues.

2. Procédé selon la revendication 1 dans lequel la matière première comporte 45,0-60,0 % en poids de SiO₂, 12,0-25,0 % en poids d'Al₂O₃, 5,0-25,0 % en poids d'oxyde de fer total exprimé en tant que Fe₂O₃, 2,0-6,0 % en poids d'alkali total, 5,0-25,0 % en poids de CaO, 4,0-25,0 % en poids de MgO et 0,0-5,0 % en poids de TiO₂ et des traces d'autres oxydes pour arriver à 100%.

3. Procédé selon l'une des revendications précédentes dans lequel la chambre de fusion comporte des parois d'acier doubles séparées par de l'eau de refroidissement en circulation .

4. Procédé selon l'une des revendications précédentes dans lequel de la chaleur est récupérée :
- des fumées chaudes et/ou du liquide de refroidissement ; et/ou
- des fumées chaudes pour préchauffer les matières premières.

5. Procédé selon l'une des revendications précédentes dans lequel au moins une partie du bain fondu est retirée en continu ou en discontinu du four de fusion.

6. Procédé selon l'une des revendications précédentes dans lequel le four de fusion comporte au moins un brûleur immergé et ledit au moins un brûleur immergé est réglé de manière à maintenir le bain fondu dans un état turbulent de telle sorte que le volume du bain fondu turbulent est au moins 8%, de préférence au moins 10 %, plus particulièrement au moins 15% plus élevé que le niveau qu'aurait le bain fondu si aucun brûleur ne fonctionnait, et le procédé étant notamment opéré de telle sorte qu'aucune couche de mousse significative ne se forme en surface du bain fondu.

7. Procédé selon l'une des revendications précédentes dans lequel la combustion immergée est effectuée de telle sorte qu'un motif de flux de bain fondu substantiellement toroïdal est généré dans le bain fondu, qui présente un axe central de révolution essentiellement vertical et comporte des flux majeurs convergeant centralement vers l'intérieur à la surface du bain fondu, le flux se déplaçant vers le bas à proximité de l'axe central de révolution et étant recirculé dans un mouvement ascendant vers la surface de bain fondu, définissant ainsi un motif de flux essentiellement toroïdal.

8. Procédé selon l'une des revendications précédentes dans lequel l'étape de fusion comporte la fusion de la charge de matières premières solides dans un four à combustion immergée en soumettant le bain fondu à un motif de flux qui se présente sous la forme d'un motif de flux essentiellement toroïdal dans le bain fondu, comportant des vecteurs de flux majeurs convergeant centralement vers l'intérieur à la surface du bain fondu, l'axe central de révolution du toroïde étant essentiellement vertical, et dans lequel au fond du four de fusion les vecteurs de flux changent d'orientation pour présenter des composantes orientées vers l'extérieur et ensuite vers le haut, le motif de flux étant déterminé par simulation à l'aide d'une analyse de la dynamique des fluides par ordinateur.

9. Installation de production pour la fabrication de fibres de basalte continues, comportant un four de fusion à combustion immergée (1) comprenant des parois (19) de chambre de fusion (3) et au moins un brûleur immergé, et équipé d'un dispositif de chargement ou d'alimentation (10) de matières premières et d'une ouverture de déversement de bain fondu (9), et un dispositif de formage de fibres continues (20), installation dans laquelle les parois de la chambre de fusion (3) comportent de doubles parois en acier (19) séparées par un liquide de refroidissement en circulation, de préférence de l'eau, dans laquelle les brûleurs à combustion immergée (21,22,23,24,25,26) sont agencés au fond du four de fusion dans une zone de brûleurs essentiellement annulaire, de préférence sur un cercle de brûleurs (27), and dans laquelle le four de fusion est immédiatement suivi d'un dispositif de formage (20) sans aucune étape d'affinage intermédiaire.

10. Installation de production selon la revendication 9 dans laquelle les brûleurs (21,22,23,24,25,26) sont agencés à une distance entre brûleurs adjacents de 250 - 1250 mm, avantageusement de 500 - 900 mm, de préférence de 600 - 800, plus particulièrement de 650 - 750 mm.

11. Installation de production selon l'une des revendications 9 à 10 dans laquelle chaque axe de brûleur et/ou un vecteur de vitesse du flux ascendant au-dessus ou à proximité des brûleurs immergés est légèrement incliné par rapport à la verticale, par exemple d'un angle qui est ≥ 1°, ≥ 2°, ≥ 3° ou ≥ 5° et/ou qui est ≤ 30°, de préférence ≤ 15°, plus particulièrement ≤ 10°, et ce plus particulièrement vers le centre du four de fusion (1).

12. Installation de production selon l'une des revendications 9 à 11 dans laquelle chaque axe de brûleur est incliné d'un angle de tourbillonnement par rapport à un plan vertical qui passe à travers un axe central vertical du four de fusion et le centre du brûleur, l'angle de tourbillonnement étant ≥ 1°, ≥ 2°, ≥ 3°, ≥ 5° et/ou ≤ 30°, ≤ 20°, ≤15° ou ≤ 10°.
